(19) Europäisches Patentamt
European Patent Office
Office européen des brevets

(11) **EP 4 727 217 A1**

(12) **EUROPEAN PATENT APPLICATION**
published in accordance with Art. 153(4) EPC

(43) Date of publication:
**15.04.2026 Bulletin 2026/16**

(21) Application number: **23943500.1**

(22) Date of filing: **28.12.2023**

(51) International Patent Classification (IPC):
**H04W 52/02** (2009.01)

(52) Cooperative Patent Classification (CPC):
**G06N 3/006; H04B 17/318; H04W 16/28;
H04W 24/02; H04W 24/10; H04W 52/02;
Y02D 30/70**

(86) International application number:
**PCT/CN2023/142950**

(87) International publication number:
**WO 2025/001029 (02.01.2025 Gazette 2025/01)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **25.06.2023 CN 202310758434**

(71) Applicant: **ZTE CORPORATION**
**Shenzhen, Guangdong 518057 (CN)**

(72) Inventor: **DU, Chunmei**
**Shenzhen, Guangdong 518057 (CN)**

(74) Representative: **Deambrogi, Edgardo et al**
**Jacobacci & Partners S.p.A.**
**Corso Emilia 8**
**10152 Torino (IT)**

(54) **ANTENNA WEIGHT VALUE DETERMINATION METHOD AND APPARATUS, AND STORAGE MEDIUM AND ELECTRONIC APPARATUS**

(57) Provided in the embodiments of the present disclosure are an antenna weight value determination method and apparatus, and a storage medium and an electronic apparatus. The method comprises: according to user terminal data and channel state information, identifying the distribution of user terminals in a cell in different channel states; and on the basis of the distribution of the user terminals, determining an optimal antenna weight value in the different channel states.

**Fig. 3**

Identifying, based on user terminal data and channel state information, distribution of user terminals in a cell under different channel states — S302

Determining optimal antenna weight values under the different channel states based on the distribution of the user terminals — S304

## Description

### Technical Field

Embodiments of the present disclosure relate to the technical field of network coverage optimization, and in particular, to an antenna weight value determination method and apparatus, and a storage medium and an electronic apparatus.

### Background

To reduce energy consumption and waste, intelligent energy-saving solutions are usually adopted in some antenna application scenarios. For example, a part of channels of the antenna may be shut down (turned off) to achieve channel shutdown energy saving. However, when channels are shut down without modifying the antenna weight, the coverage range of the antenna will change, and this change in coverage range will affect the normal communication between various network devices. Therefore, to ensure the stability of the communication environment, the antenna needs to maintain an optimal network coverage range even when a shutdown state of the channel changes.

It is known that preset antenna weight values cannot cope with diverse coverage scenarios. Therefore, to address diverse coverage scenarios and optimize coverage effects, a method commonly used in related technologies includes the following operations: collecting Measurement Report (MR) data of user terminals, predicting or estimating coverage situations under different antenna weight values, and then using an Artificial Intelligence (AI) optimization algorithm to select an antenna weight value that is able to achieve optimal coverage. However, this optimization process cannot be applied to scenarios where the channel shutdown energy saving function is enabled. The specific reason is that the key technology of this algorithm relies on predicting the coverage under other weight values based on the antenna's gains at respective weight values. After channels are shut down, the original antenna gain changes, and the coverage patterns formed by the same antenna weight value differ between channel shutdown and non-shutdown scenarios, leading to deviations in the predicted coverage under other weight values. Therefore, when antenna weight value optimization and channel shutdown energy saving are enabled simultaneously, the antenna weight value optimized by the AI optimization algorithm may not be the optimal result, thereby impairing the network coverage effect.

### Summary

The embodiments of the present disclosure provide an antenna weight value determination method and apparatus, and a storage medium and an electronic apparatus, which may at least solve the problem in the related art that existing antenna weight value adjustment schemes cannot be applied to scenarios where channel shutdown energy saving is enabled.

According to an embodiment of the present disclosure, an antenna weight value determination method is provided, including: identifying, based on user terminal data and channel state information, distribution of user terminals in a cell under different channel states; and determining optimal antenna weight values under the different channel states based on the distribution of the user terminals.

According to another embodiment of the present disclosure, an antenna weight value determination apparatus is provided, including: an identification module, configured to identify, based on user terminal data and channel state information, distribution of user terminals in a cell under different channel states; and a determination module, configured to determine optimal antenna weight values under the different channel states based on the distribution of the user terminals.

According to another embodiment of the present disclosure, a computer-readable storage medium is also provided. A computer program is stored in the computer-readable storage medium, and the computer program, when executed by a processor, causes the processor to implement operations in any one of the method embodiments.

According to another embodiment of the present disclosure, an electronic apparatus is provided, including a memory and a processor, wherein the memory stores a computer program, and the processor is configured to run the computer program so as to execute operations in any one of the method embodiments.

### Brief Description of the Drawings

Fig. 1 is a hardware structure block diagram of a network device running an antenna weight value determination method according to an embodiment of the present disclosure;

Fig. 2 is a schematic diagram of a network architecture for running an antenna weight value determination method according to an embodiment of the present disclosure;

Fig. 3 is a flow chart of an antenna weight value determination method according to an embodiment of the present disclosure;

Fig. 4 is a structure block diagram of an antenna weight value determination apparatus according to an embodiment of the present disclosure;

Fig. 5 is a flow chart of an antenna weight value self-adjustment method according to an embodiment of the present disclosure, which can be applied under a channel shutdown scenario;

Fig. 6 is a flow chart of an optimization strategy when the distribution of user terminals under a channel shutdown state is consistent with that under a channel non-shutdown state according to an embodiment of the present disclosure; and

Fig. 7 is a flow chart of an optimization strategy when the distribution of user terminals under a channel shutdown state is inconsistent with that under a channel non-shutdown state according to an embodiment of the present disclosure.

## Detailed Description of the Embodiments

The embodiments of the present disclosure will be described below in detail with reference to the accompanying drawings and in conjunction with embodiments.

It should be noted that the terms "first", "second" and the like in the specification and claims of the present disclosure and the above-mentioned drawings are used to distinguish similar objects, and are not necessarily used to describe a specific order or sequence.

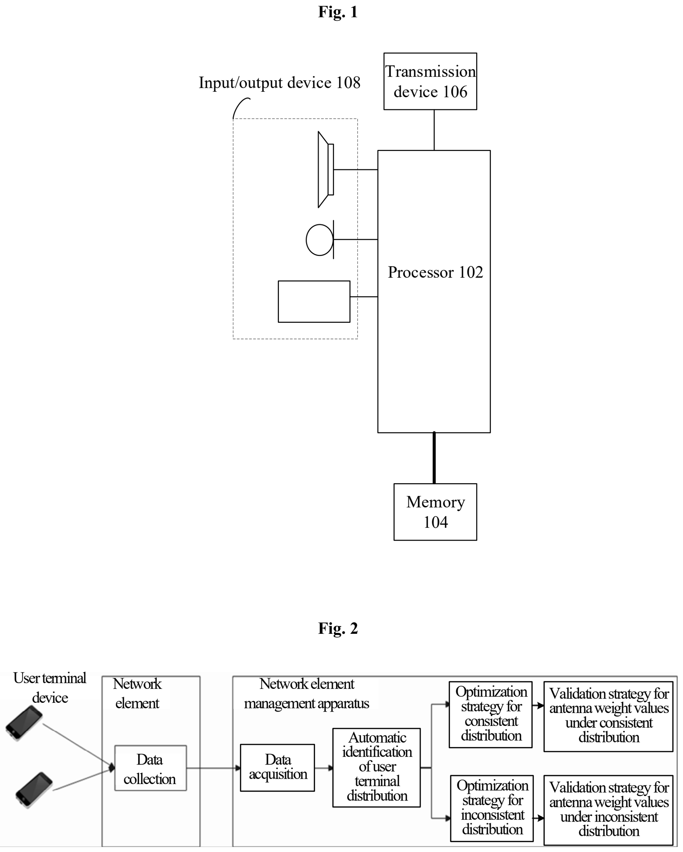

The method embodiments provided in the embodiments of the present application may be executed in a mobile terminal, a computer terminal, a network device or a similar computing device. Taking the operation on a network device as an example, Fig. 1 is a hardware structure block diagram of a network device running an antenna weight value determination method according to an embodiment of the present disclosure. As shown in Fig. 1, the network device may include one or more (only one is shown in Fig. 1) processors 102 (the processor 102 may include but is not limited to a processing device such as a microprocessor or a programmable logic device) and a memory 104 for storing data. The above-mentioned network device may further include a transmission device 106 for communication functions and an input/output device 108. Those having ordinary skill in the art can understand that the structure shown in Fig. 1 is only schematic, and does not limit the structure of the above-mentioned network device. For example, the network device may further include more or fewer components than those shown in Fig. 1, or have a different configuration from that shown in Fig. 1.

The memory 104 may be used to store computer programs, for example, software programs and modules of application software, such as the computer program corresponding to the antenna weight value determination method in the embodiment of the present disclosure. The one or more processors 102 execute various functional applications and data processing by running the computer program stored in the memory 104, that is, implements the above-mentioned method. The memory 104 may include a high-speed random access memory, and may also include a non-volatile memory, such as one or more magnetic storage devices, flash memory, or other non-volatile solid-state memories. In some instances, the memory 104 may further include a memory remotely arranged relative to the one or more processors 102, and these remote memories may be connected to the network device through a network. Examples of the above-mentioned network include but are not limited to the Internet, an intranet, a local area network, a mobile communication network, and combinations thereof.

The transmission device 106 is used for receiving or sending data via a network. Specific examples of the above-mentioned network may include a wireless network provided by a communication provider of the network device. In an instance, the transmission device 106 includes a Network Interface Controller (NIC), which may be connected to other network devices through a base station so as to communicate with the Internet. In an instance, the transmission device 106 may be a Radio Frequency (RF) module, which is used for communicating with the Internet in a wireless manner.

The embodiments of the present application may run on the network architecture shown in Fig. 2. As shown in Fig. 2, the network architecture includes: user terminal devices, a network element, and a network element management apparatus.

The network element is configured to collect user terminal data and channel shutdown state information of a cell. The user terminal data refers to signal strength measured by the user terminal and orientation relative to the cell, and is configured to be data representing the distribution of user terminals. The channel shutdown state information refers to the shutdown state of antenna channels when the terminal reports the user terminal data.

The network element management apparatus is configured to collect and store the user terminal data and the channel state information of the cell, and initiate identification of the distribution of user terminals after data collection is completed.

Specifically, the identification of the distribution of user terminals includes: identifying the distribution of user terminals based on the user terminal data and the channel state information of the cell collected through data acquisition, and determining whether the distribution of user terminals under a channel shutdown state is consistent with that under a channel non-shutdown state.

For a cell where the distribution of user terminals under the channel shutdown state is consistent with that under the channel non-shutdown state, the network element management apparatus automatically performs data conversion, converting the user terminal data corresponding to the channel shutdown scenario into that corresponding to the channel non-shutdown scenario to unify user terminal data of different scenarios, which solves the problem that the antenna gain changes after channel shutdown, and that direct use of original user terminal data for calculation will lead to inaccurate input data and deviation in calculation results. The converted user data and the user data under the channel non-shutdown state are jointly used for antenna weight value optimization to obtain a set of optimal antenna weight values, which are applicable to the non-shutdown scenario. The optimal antenna weight values for the channel non-shutdown scenario are output, and a set of suitable weight values is matched for channel shutdown according to a set of mapping relationships between channel shutdown weight values and channel non-shutdown weight values under the same coverage pattern in the network element management apparatus.

The optimized antenna weight values that are automatically switched according to antenna states ensure that the coverage range does not change before and after channel shutdown and remains optimal, matching the distribution of user terminals to achieve the optimal coverage effect, which solves the problem that the antenna coverage range changes if the weight values are not modified after channel shutdown.

For a cell where the distribution of user terminals under the channel shutdown state is inconsistent with that under the channel non-shutdown state, the same set of antenna coverage patterns cannot cope with different distributions of user terminals. Therefore, the channel shutdown scenario and the channel non-shutdown scenario cannot be optimized together. The network element management apparatus needs to distinguish user terminal data under different channel shutdown scenarios, and use such data to optimize a set of antenna weight values for each different channel shutdown scenario. The two sets of weight values have different coverage ranges, the weight values for the channel shutdown scenario match the distribution of user terminals under the channel shutdown scenario, and the weight values for the channel non-shutdown scenario match the distribution of user terminals under the channel non-shutdown scenario, so as to solve the scenario where the distribution of user terminal changes after channel shutdown.

The network element management apparatus is further configured to generate an optimization strategy, wherein generating the optimization strategy includes: automatically adapting and validating the antenna weight values that match the distribution of user terminals according to the channel shutdown state of the cell, so that the antenna weight values match the distribution of user terminals.

The antenna weight values consist of azimuth angle, tilt angle, horizontal beamwidth, and vertical beamwidth. Different antenna weight values form different coverage patterns and present different wireless signal coverage effects.

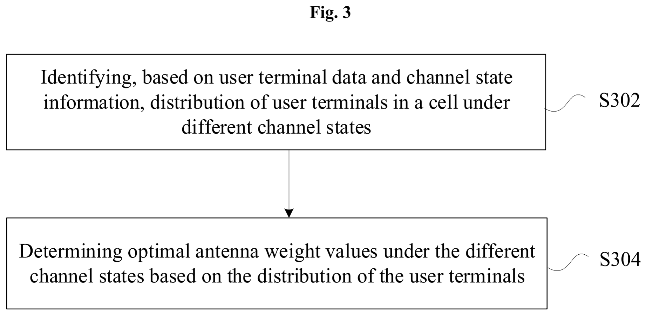

The embodiments of the present disclosure provide an antenna weight value determination method running on the described network device or network architecture. Fig. 3 is a flow chart of an antenna weight value determination method according to an embodiment of the present disclosure. As shown in Fig. 3, the flow includes the following operations S302 and S304.

In operation S302, distribution of user terminals in a cell under different channel states is identified based on user terminal data and channel state information. The channel state information includes channel shutdown states and a channel non-shutdown state.

The channel shutdown states include different channel shutdown states after channels are shut down according to different channel shutdown ratios, and the channel shutdown ratio is a ratio of a number of shutdown channels to a total number of antenna channels.

In an exemplary embodiment, the total number of antenna channels is a multiple of the number of shutdown channels of the antenna.

For example, in a 5G network environment, the current antenna types mainly include 64-channel, 32-channel, 16-channel, 8-channel, and 4-channel antennas. For each of the above antenna types, the channel shutdown states generally include: shutting down one-quarter of the channels, shutting down one-half of the channels, and shutting down three-quarters of the channels.

For another example, for a 64-channel antenna, in addition to the above channel shutdown states, the channel shutdown states further include: shutting down one-eighth of the channels, shutting down one-sixteenth of the channels, and shutting down one-thirty-second of the channels.

The shutdown states of other types of antennas also include other channel shutdown states in addition to the above channel shutdown states, which can refer to the examples described for the 64-channel antenna, and will not be repeated in this embodiment.

In this embodiment, the user terminal data includes: a Reference Signal Receiving Power (RSRP), a Horizontal Direction Of Arrival (HDOA), and a Vertical Direction Of Arrival (VDOA) of a current cell where the user terminal is located, as well as an RSRP, an HDOA, and a VDOA of a neighboring cell of the current cell.

Before operation S302 of this embodiment, the method further includes: dividing cells whose inter-cell area overlap meets a threshold condition into an optimization cluster, so as to determine the antenna weight values based on the optimization cluster.

In an embodiment, the operation of identifying the distribution of the user terminals in the cell under the different channel states includes:

for any cell in any optimization cluster, dividing the user terminal data in the cell into groups according to the different channel states, wherein each cell in the optimization cluster includes at least one channel state; performing gridding processing on the user terminal data in each of the groups based on a Horizontal Direction of Arrival (HDOA) and a Vertical Direction of Arrival (VDOA) of the cell, so as to obtain gridded data corresponding to the different channel states; respectively obtaining similarity between the gridded data corresponding to each of the different channel shutdown states and the gridded data corresponding to the channel non-shutdown state; and identifying the distribution of the user terminals in the cell under the different channel states based on the similarity.

The distribution of the user terminals in the cell under the different channel states includes one of the following distributions: the distribution of the user terminals under all the channel shutdown states is consistent with the distribution of the user terminals under the channel non-shutdown state; the distribution of the user terminals under all the channel shutdown states is inconsistent with the distribution of the user terminals under the channel non-shutdown state; the distribution of the user terminals under a part of the channel shutdown states is consistent with the distribution of the user terminals under the channel non-shutdown state; the distribution of the user terminals under a part of the channel shutdown states is inconsistent with the distribution of the user terminals under the channel non-shutdown state.

In operation S304, optimal antenna weight values under the different channel states are determined based on the distribution of the user terminals.

In an embodiment, in a case where the distribution of the user terminals under all the channel shutdown states is consistent with the distribution of the user terminals under the channel non-shutdown state, the operation of determining the optimal antenna weight values under the different channel states includes: for any of the channel shutdown states in the cell, converting Reference Signal Receiving Power (RSRP) data collected under the channel shutdown state into first RSRP data under the channel non-shutdown state; predicting second RSRP data under a plurality of different antenna weight values based on the first RSRP data and a gain table; and comparing the first RSRP data and the second RSRP data, and selecting an antenna weight value corresponding to maximum RSRP data as the optimal antenna weight value under the channel shutdown state.

In an embodiment, in a case where the distribution of the user terminals under all the channel shutdown states is inconsistent with the distribution of the user terminals under the channel non-shutdown state, determining the optimal antenna weight values under the different channel states includes: for any of the channel shutdown states in the cell, predicting fourth Reference Signal Receiving Power (RSRP) data under a plurality of different antenna weight values based on third RSRP data under the channel shutdown state and a gain table; and comparing the third RSRP data and the fourth RSRP data, and selecting an antenna weight value corresponding to maximum RSRP data as the optimal antenna weight value under the channel shutdown state.

In an embodiment, in a case where the distribution of the user terminals under a part of the channel shutdown states is consistent with the distribution of the user terminals under the channel non-shutdown state, determining the optimal antenna weight values under the different channel states includes: in the cell, for any of the channel shutdown states under which the distribution of the user terminals is consistent with the distribution of the user terminals under the channel non-shutdown state, converting Reference Signal Receiving Power (RSRP) data collected under the channel shutdown state into fifth RSRP data under the channel non-shutdown state; predicting sixth RSRP data under a plurality of different antenna weight values based on the fifth RSRP data and a gain table; and comparing the fifth RSRP data and the sixth RSRP data, and selecting an antenna weight value corresponding to maximum RSRP data as the optimal antenna weight value under the channel shutdown state.

In an embodiment, in a case where the distribution of the user terminals under a part of the channel shutdown states is inconsistent with the distribution of the user terminals under the channel non-shutdown state, determining the optimal antenna weight values under the different channel states includes: for any of the channel shutdown states under which the distribution of the user terminals is inconsistent with the distribution of the user terminals under the channel non-shutdown state, predicting eighth Reference Signal Receiving Power (RSRP) data under a plurality of different antenna weight values based on seventh RSRP data under the channel shutdown state and a gain table; and comparing the seventh RSRP data and the eighth RSRP data, and selecting an antenna weight value corresponding to maximum RSRP data as the optimal antenna weight value under the channel shutdown state.

In an embodiment, when determining the optimal antenna weight values under the different channel states, the method further includes: determining an antenna weight value corresponding to the RSRP data collected under the channel non-shutdown state as the optimal antenna weight value under the channel non-shutdown state.

After operation S304 of this embodiment, the method further includes: switching, according to a current channel state of the cell, an antenna weight value of the cell to the optimal antenna weight value corresponding to the current channel state of the cell.

Through the above operations, the distribution of user terminals in a cell under different channel states is identified according to user terminal data and channel state information, so as to determine the optimal antenna weight values under the different channel states based on the distribution of user terminals. It can be seen that in the process of determining the optimal antenna weight values under different channel states, channel state information can be introduced. Therefore, the problem that existing antenna weight value adjustment schemes in related technologies cannot be applied to scenarios where channel shutdown energy saving is enabled can be solved, and the effect of ensuring the accuracy of determining optimal antenna weight values is achieved.

Through the description of the above implementations, those having ordinary skill in the art can clearly understand that the method according to the above embodiments can be implemented by means of software plus a necessary general hardware platform, and of course, the method according to the above embodiments can also be implemented by hardware, but in many cases, the former is a better implementation. Based on such understanding, the essence of the technical solution of the present disclosure or the part contributing to the related art can be embodied in the form of a software product. The computer software product is stored in a storage medium (such as a Read-Only Memory (ROM)/Random Access Memory (RAM), magnetic disk, optical disc) and includes several instructions to enable a terminal device (which may be a mobile phone, a computer, a server, a network device, etc.) to execute the methods described in the various embodiments of the present disclosure.

An antenna weight value determination apparatus is also provided in this embodiment, which is used to implement the above embodiments and exemplary implementations, and the descriptions that have been given will not be repeated here. As used below, the term "module" may be a combination of software and/or hardware that implements a predetermined function. Although the apparatus described in the following embodiments is preferably implemented by software, implementation by hardware or a combination of software and hardware is also possible and conceivable.

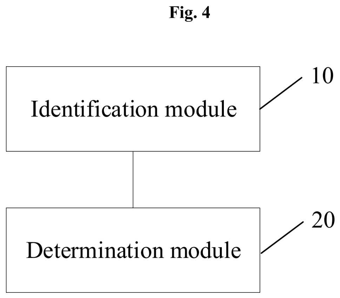

Fig. 4 is a structure block diagram of an antenna weight value determination apparatus according to an embodiment of the present disclosure. As shown in Fig. 4, the apparatus is used to run the antenna weight value determination method in any of the above embodiments, and includes an identification module 10 and a determination module 20.

The identification module 10 is configured to identify, based on user terminal data and channel state information, distribution of user terminals in a cell under different channel states.

The channel state information includes channel shutdown states and a channel non-shutdown state. The channel shutdown states include different channel shutdown states after channels are shut down according to different channel shutdown ratios, and the channel shutdown ratio is a ratio of a number of shutdown channels to a total number of antenna channels

The determination module 20 is configured to determine optimal antenna weight values under the different channel states based on the distribution of the user terminals.

In an embodiment, the identification module 10 includes:

a grouping unit, configured to divide, for any cell in any optimization cluster, the user terminal data in the cell into groups according to the different channel states, wherein the optimization cluster is composed of a plurality of cells whose inter-cell area overlap meets a threshold condition, and each cell in the optimization cluster includes at least one channel state;

a processing unit, configured to perform gridding processing on the user terminal data in each of the groups based on a Horizontal Direction of Arrival (HDOA) and a Vertical Direction of Arrival (VDOA) of the cell, so as to obtain gridded data corresponding to the different channel states;

an acquisition unit, configured to respectively obtain similarity between the gridded data corresponding to each of the different channel shutdown states and the gridded data corresponding to the channel non-shutdown state; and

an identification unit, configured to identify the distribution of the user terminals in the cell under the different channel states based on the similarity.

In an embodiment, the distribution of the user terminals in the cell under the different channel states includes one of the following distributions: the distribution of the user terminals under all the channel shutdown states is consistent with the distribution of the user terminals under the channel non-shutdown state; the distribution of the user terminals under all the channel shutdown states is inconsistent with the distribution of the user terminals under the channel non-shutdown state; the distribution of the user terminals under a part of the channel shutdown states is consistent with the distribution of the user terminals under the channel non-shutdown state; the distribution of the user terminals under a part of the channel shutdown states is inconsistent with the distribution of the user terminals under the channel non-shutdown state.

In an exemplary embodiment, in a case where the distribution of the user terminals under all the channel shutdown states is consistent with the distribution of the user terminals under the channel non-shutdown state, the determination module 20 includes:

a first conversion unit, configured to convert, for any of the channel shutdown states in the cell, Reference Signal Receiving Power (RSRP) data collected under the channel shutdown state into first RSRP data under the channel non-shutdown state;

a first prediction unit, configured to predict second RSRP data under a plurality of different antenna weight values based on the first RSRP data and a gain table; and

a first comparison unit, configured to compare the first RSRP data and the second RSRP data, and select an antenna weight value corresponding to maximum RSRP data as the optimal antenna weight value under the channel shutdown state.

In an exemplary embodiment, in a case where the distribution of the user terminals under all the channel shutdown states is inconsistent with the distribution of the user terminals under the channel non-shutdown state, the determination module 20 includes:

a second prediction unit, configured to predict, for any of the channel shutdown states in the cell, fourth Reference Signal Receiving Power (RSRP) data under a plurality of different antenna weight values based on third RSRP data under the channel shutdown state and a gain table; and;

a second comparison unit, configured to compare the third RSRP data and the fourth RSRP data, and select an antenna weight value corresponding to maximum RSRP data as the optimal antenna weight value under the channel shutdown state.

In an exemplary embodiment, in a case where the distribution of the user terminals under a part of the channel shutdown states is consistent with the distribution of the user terminals under the channel non-shutdown state, the determination module 20 includes:

a second conversion unit, configured to convert, in the cell and for any of the channel shutdown states under which the distribution of the user terminals is consistent with the distribution of the user terminals under the channel non-shutdown state, Reference Signal Receiving Power (RSRP) data collected under the channel shutdown state into fifth RSRP data under the channel non-shutdown state;

a third prediction unit, configured to predict sixth RSRP data under a plurality of different antenna weight values based on the fifth RSRP data and a gain table; and

a third comparison unit, configured to compare the fifth RSRP data and the sixth RSRP data, and select an antenna weight value corresponding to maximum RSRP data as the optimal antenna weight value under the channel shutdown state.

In an exemplary embodiment, in a case where the distribution of the user terminals under a part of the channel shutdown states is inconsistent with the distribution of the user terminals under the channel non-shutdown state, the determination module 20 includes:

a fourth prediction unit, configured to predict, for any of the channel shutdown states under which the distribution of the user terminals is inconsistent with the distribution of the user terminals under the channel non-shutdown state, eighth Reference Signal Receiving Power (RSRP) data under a plurality of different antenna weight values based on seventh RSRP data under the channel shutdown state and a gain table; and

a fourth comparison unit, configured to compare the seventh RSRP data and the eighth RSRP data, and selecting an antenna weight value corresponding to maximum RSRP data as the optimal antenna weight value under the channel shutdown state.

In an embodiment, the determination module 20 further includes: a determination unit, configured to determine an antenna weight value corresponding to the RSRP data collected under the channel non-shutdown state as the optimal antenna weight value under the channel non-shutdown state.

It should be noted that each of the above modules may be implemented by software or hardware. For the latter, the above modules may be implemented in the following ways, but not limited thereto: all the above modules are located in the same processor; or, the above modules are respectively located in different processors in any combination.

To facilitate understanding of the technical solutions provided in the embodiments of the present disclosure, the technical solutions are described in detail as follows with reference to embodiments of specific scenarios.

In a 5G network environment, there are various channel shutdown energy-saving strategies for antennas, such as scenarios of shutting down one-quarter of the channels, shutting down one-half of the channels, and shutting down three-quarters of the channels. Each channel shutdown energy-saving strategy corresponds to a set of antenna weight values and a gain table for the antenna weight values.

The gain table is built into a processing system of a network management apparatus. The gain table includes: a gain table of each antenna under a non-shutdown state and gain tables under shutdown states (e.g., gain tables when 1/4, 1/2, or 3/4 of the channels are shut down respectively).

Each type of antenna is provided with a set of antenna gain tables (i.e., a gain table under the non-shutdown state and gain tables under the shutdown states), which remain fixed as long as the number of antennas is fixed.

The format of a gain table is shown in Table 1. In this table, the range of HDOA-Angle is -90° to 90°, and the range of VDOA-Angle is -45° to 45°. Table 1 is merely an example and only shows part of the antenna weight values.

Table 1

| Weight combination | VDOA-Angle Gain(dB)_ | HDOA(-90) Gain(dB)_ | HDOA(-89) Gain(dB)_ | HDOA(-88) Gain(dB)_ | ... | HDOA(87) Gain(dB)_ | HDOA(88) Gain(dB)_ | HDOA(89) Gain(dB)_ | HDOA(90) Gain(dB)_ |
|---|---|---|---|---|---|---|---|---|---|
| W1 | -45 | -15.4 | -15.2 | -15.0 | ... | -14.8 | -15.0 | -15.2 | -15.4 |
| W1 | -44 | -16.6 | -16.3 | -16.1 | ... | -15.9 | -16.1 | -16.3 | -16.6 |
| ... | ... | ... | ... | ... | ... | ... | ... | ... | ... |
| W1 | 44 | -34.6,-34.3,-34.1 | | | ... | | | | -33.7,-33.9,-34.1,-34.3,-34.6 |
| W1 | 45 | -24.4,-24.2,-24.0 | | | ... | | | | -23.6,-23.8,-24.0,-24.2,-24.4 |
| ... | ... | ... | ... | ... | ... | ... | ... | ... | ... |
| Wn | -20 | -35.6,-35.4,-35.2,-34.9 | | | ... | | | | -34.6,-34.9,-35.1,-35.3 |
| Wn | -19 | -23.6,-23.4,-23.2,-22.9 | | | ... | | | | -27.4,-27.6,-27.9,-28.1 |
| ... | ... | ... | ... | ... | ... | ... | ... | ... | ... |

For each type of antenna, there are a set of multiple tables in the format shown in Table 1. For example:

For a 64-channel antenna, the multiple tables include: a 64T non-shutdown weight gain table, a 64T 1/4-shutdown weight gain table, a 64T 1/2-shutdown weight gain table, and a 64T 3/4-shutdown weight gain table;

For a 32-channel antenna, the multiple tables include: a 32T non-shutdown weight gain table, a 32T 1/4-shutdown weight gain table, a 32T 1/2-shutdown weight gain table, and a 32T 3/4-shutdown weight gain table.

Similar to the above-mentioned 64-channel or 32-channel antennas, other types of antennas are also provided with a set of antenna gain tables corresponding to different shutdown strategies.

A correspondence between weight values under the channel non-shutdown state and weight values under the channel shutdown states for each antenna is shown in Table 2, which is built into the system of the network management apparatus. For the same coverage pattern, the antenna weight values and the number of antennas corresponding to different numbers of channels are fixed, so this table remains fixed.

Table 2

| Weight values under non-shutdown | Weight values under 1/4 shutdown | Weight values under 1/2 shutdown | Weight values under 3/4 shutdown |
|---|---|---|---|
| W1 | W11 | W12 | W13 |
| W1 | W21 | W22 | W23 |
| ... | ... | ... | ... |

In this embodiment, the number of such correspondences is equal to the number of sets of weight values.

Each W in Table 2 corresponds to a plurality of sub-beams, and each sub-beam consists of an azimuth angle, a tilt angle, a horizontal beamwidth, and a vertical beamwidth. For example, if W corresponds to 8 beams, then the SubBeams are as follows:

SubBeam1: azimuth = '-44', tilt = '-1', beamWidthH = '10', beamWidthV = '6';

SubBeam2: azimuth = '-31', tilt = '-1', beamWidthH = '10', beamWidthV = '6';

SubBeam3: azimuth = '-18', tilt = '-1', beamWidthH = '10', beamWidthV = '6';

SubBeam4: azimuth = '-6', tilt = '-1', beamWidthH = '10', beamWidthV = '6';

SubBeam5: azimuth = '6', tilt = '-1', beamWidthH = '10', beamWidthV = '6';

SubBeam6: azimuth = '18', tilt = '-1', beamWidthH = '10', beamWidthV = '6';

SubBeam7: azimuth = '31', tilt = '-1', beamWidthH = '10', beamWidthV = '6';

SubBeam8: azimuth = '44', tilt = '-1', beamWidthH = '10', beamWidthV = '6'.

The embodiments of the present disclosure provide an automatic antenna weight value adjustment method. By means of this method, the characteristics of the distribution of user terminals under the channel shutdown energy-saving state and the distribution under the channel non-shutdown state are automatically identified, so that different optimization strategies are automatically adapted to the distribution of user terminals in different states. This ensures that the wireless coverage is consistent with the distribution of user terminals to achieve optimal coverage, and can solve the problem that channel shutdown energy saving affects the optimization effect of antenna weight values.

The method may be applied to wireless network optimization scenarios, and can optimize the wireless coverage effect under channel shutdown energy saving states or under energy-saving states that affect antenna gain changes.

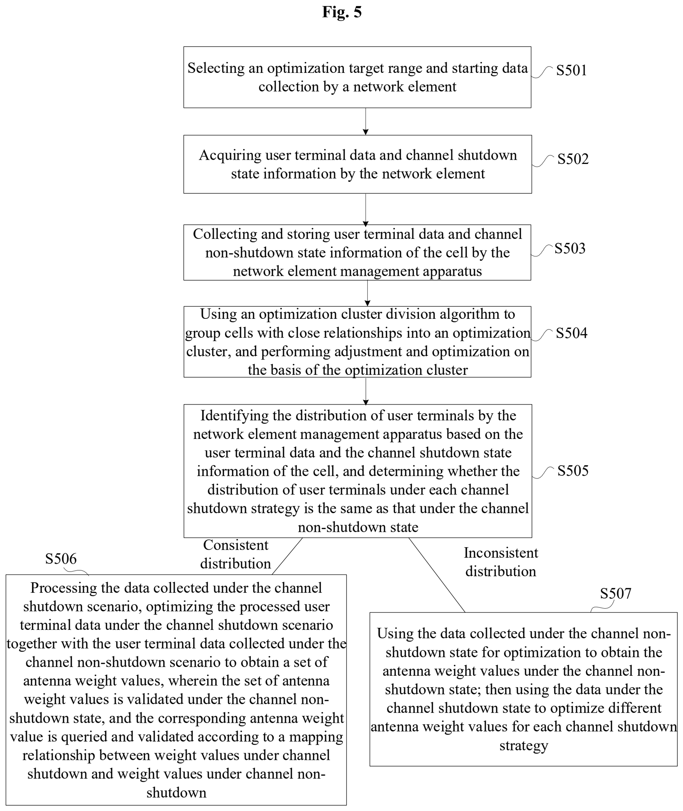

Fig. 5 is a flow chart of an antenna weight value self-adjustment method according to an embodiment of the present disclosure, which can be applied under a channel shutdown scenario. As shown in Fig. 5, the method includes the following operations S501 to S507.

In operation S501, an optimization target range is selected and data collection by a network element is started.

In operation S502, user terminal data and channel state information are acquired by the network element.

The user terminal data refers to signal strength measured by each user terminal and orientation of each user terminal relative to the cell, and is data used to characterize the distribution of user terminals. The user terminal data includes: RSRP, HDOA, and VDOA of the current cell where the user terminal is located, as well as the RSRP, HDOA, and VDOA information of neighboring cells of the current cell, which are measured by the user terminal.

The channel state information refers to an antenna channel shutdown situation when the user terminal reports the user terminal data.

In operation S503, the user terminal data and the channel shutdown state information of the cell are collected and stored by a network element management apparatus.

In operation S504, an optimization cluster division algorithm is used to group cells with close relationships into an optimization cluster, and adjustment and optimization are performed on the basis of the optimization cluster.

Since the adjustment of antenna weight values may affect other cells, resulting in overlapping coverage and over-coverage, grouping needs to be performed first, and cells within the group are adjusted together while considering the inter-cell impact.

Specifically, cells whose inter-cell area overlap meets a threshold condition are divided into an optimization cluster.

In operation S505, the distribution of user terminals is identified by the network element management apparatus based on the user terminal data and the channel shutdown state information of the cell, and it is determined whether the distribution of user terminals under each channel shutdown strategy is the same as that under the channel non-shutdown state. If the distribution of user terminals under a channel shutdown strategy is the same as that under the channel non-shutdown state, the optimization strategy in operation S506 is adopted; if the distribution of user terminals under a channel shutdown strategy is not same as that under the channel non-shutdown state, the optimization strategy in operation S507 is adopted.

The main basis for coverage optimization is the distribution of user terminals, and the purpose of optimization is to align the coverage resulted from the antenna weight value with the distribution of user terminals to achieve the optimal coverage effect. The automatic identification of the distribution of user terminals in this embodiment can identify the consistency of distribution under the channel shutdown states and the channel non-shutdown state, and different optimization strategies are selected based on this characteristic.

Specifically, the automatic identification on the basis of the optimization cluster includes the following operations S5051 to S5053.

In operation S5051, the user terminal data of each cell is divided into groups according to different channel shutdown states, for example, groups are divided according to 1/4 channel shutdown, 1/2 channel shutdown, 3/4 channel shutdown, and non-shutdown. The channel shutdown strategies of different cells may be different. A cell may have only 2 types of channel shutdown strategies or 1 type of channel shutdown strategy.

In operation S5052, the data of each group is divided into two-dimensional grids according to HDOA and VDOA, and the proportion of Measurement Report (MR) user data in each grid is calculated. The MR user data includes: RSRP, HDOA, and VDOA.

Specifically, gridding is performed with HDOA at a step size of HorizontalBeamGridSpace and VDOA at a step size of VerticalBeamGridSpace, and the proportion of MR in each grid is counted.

Then, the data of the two-dimensional grid is expanded into a one-dimensional vector. The one-dimensional vectors of gridded MR data under channel shutdown energy saving are as follows:

| | |
|---|---|
| X1n = [x11, x12, x13, ..., x1n] | 1/4 channel shutdown |
| X2n = [x21, x22, x23, ..., x2n] | 1/2 channel shutdown |
| X3n = [x31, x32, x33, ..., x3n] | 3/4 channel shutdown |
| X0n = [x01, x02, x03, ..., x0n] | Channel non-shutdown |

In operation S5053, the similarity between the gridded data under each channel shutdown state and the data under the non-shutdown state is calculated.

For example, an Euclidean distance between two vectors is calculated, and the smaller the distance, the greater the similarity. A distance threshold is set to control the calculation of similarity to adapt to different usage scenarios. The calculation formula of the Euclidean distance is shown in the following Formula (1):

$$d(x1, x0) = \sqrt{\sum_{i=1}^{n}(x01 - x1n)^2} \qquad \text{Formula (1)}$$

In operation S506, in a case where the distribution of user terminals under channel shutdown is consistent with that under channel non-shutdown, the data collected under the channel shutdown scenario is processed, and the processed user terminal data under the channel shutdown scenario is optimized together with the user terminal data collected under the channel non-shutdown scenario to obtain a set of weight values. In a case of the channel non-shutdown state, the set of weight values is directly validated; and in a case of the channel shutdown state, a corresponding weight value is queried according to a mapping relationship between weight values under channel shutdown and weight values under channel non-shutdown and then validated.

The algorithm idea of the optimization strategy in this operation is described as follows.

Since the antenna gain will change after channel shutdown, the original user terminal data reported by the user terminal under the channel non-shutdown state can no longer be used as benchmark data for calculation. It is necessary to convert the user terminal data under the channel shutdown state into the corresponding user terminal data under the channel non-shutdown state, and perform antenna weight value optimization together with the data under the channel non-shutdown state reported by the user terminal to obtain a set of weight values suitable for the coverage range of the channel non-shutdown scenario. Then, the weight values under the channel shutdown state are matched according to the weight value relationship between channel shutdown and channel non-shutdown under the same coverage range (i.e., Table 1 and Table 2), and automatically validated.

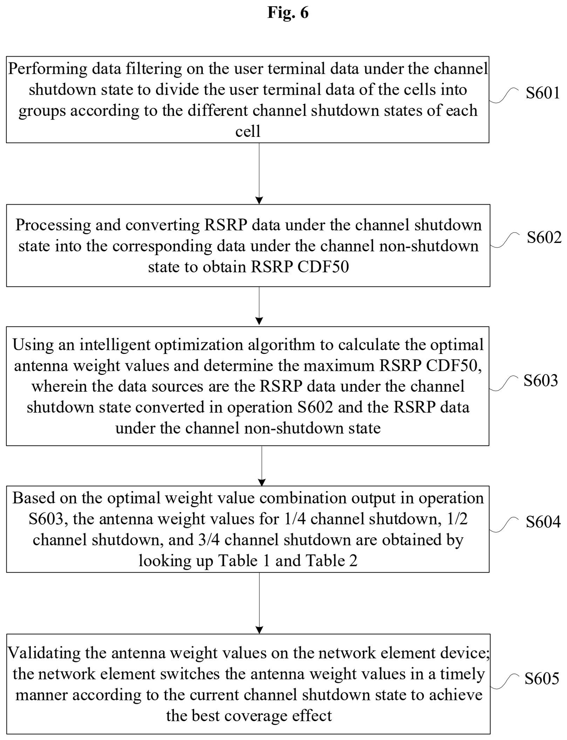

Specifically, Fig. 6 is a flow chart of an optimization strategy when the distribution of user terminals under a channel shutdown state is consistent with that under a channel non-shutdown state according to an embodiment of the present disclosure. As shown in Fig. 6, the flow includes the following operations S601 to S605.

In operation S601, data filtering is performed on the user terminal data under the channel shutdown state to divide the user terminal data of the cells into groups according to the different channel shutdown states of each cell.

In operation S602, the RSRP data under the channel shutdown state is processed and converted into the corresponding RSRP data under the channel non-shutdown state to obtain RSRP CDF50. The conversion formula is shown in the Formula (2):

$$RSRP=RSRP_s+delta\text{-}RSRP(VDOA, HDOA) \qquad \text{Formula (2)}$$

where $RSRP_s$ represents the RSRP value collected under the channel shutdown state;
delta-RSRP(VDOA, HDOA) represents the difference between the antenna gain of a Single Side Band (SSB) weight value of the cell under the channel non-shutdown state and the antenna gain of the SSB weight value corresponding to the sample under the channel shutdown state.

In operation S603, an intelligent optimization algorithm is used to calculate the optimal antenna weight values and determine the maximum RSRP CDF50. The data sources are the RSRP data under the channel shutdown state and the RSRP data under the channel non-shutdown state, which are converted in operation S601.

Specifically, an ant colony algorithm is used in this embodiment to calculate the optimal antenna weight values. The input of the algorithm includes the RSRP data under the channel shutdown state processed in operation S602 and the RSRP data reported under the channel non-shutdown state. The optimization target is the optimal RSRP CDF50, i.e., optimal coverage. The following optimization is performed on the basis of the optimization cluster.

Specifically, the optimization algorithm includes the following operations S6031 to S6034.

In operation 6031, the RSRP CDF50 under the currently configured antenna weight values is calculated. The data sources are the data under the channel shutdown state converted in operation S602 and the RSRP data under the channel non-shutdown state.

In operation 6032, an ant colony iterative algorithm is entered, the number of ants N and the number of iterations M are set, and the RSRP CDF50 under each set of weight values is predicted. The prediction formula is shown in Formula (3):

$$RSRP_{wi} = RSRP + AntGain_i - AntGain \qquad \text{Formula (3)}$$

where RSRP represents the RSRP output in operation S602 and the RSRP reported under the channel non-shutdown state;

$RSRP_{wi}$ represents the predicted RSRP when the weight value is wi;

$AntGain_i$ represents the gain corresponding to (HDOA, VDOA) under the weight value wi obtained by looking up the gain table;

AntGain represents the gain corresponding to (HDOA, VDOA) under the weight value w obtained by looking up the gain table.

In operation 6033, the RSRP CDF50 is calculated, and the weight value combination with the maximum RSRP CDF50 in this iteration is output.

Specifically, the ant colony algorithm is used to select the maximum RSRP CDF50 from the RSRP CDF50 under the currently configured antenna weight values and the RSRP CDF50 under each set of weight values.

In operation 6034, the next iteration of the ant colony algorithm is entered with the optimal weight value combination from the previous iteration serving as the input, and the optimal weight value combination is output until the number of iterations meets a termination condition.

In operation S604, based on the optimal weight value combination output in operation S603, the antenna weight values for 1/4 channel shutdown, 1/2 channel shutdown, and 3/4 channel shutdown are obtained by looking up Table 1 and Table 2.

In operation S605, the antenna weight values are validated on the network element device. The network element switches the antenna weight value in a timely manner according to the current channel shutdown state to achieve the best coverage effect.

In operation S507, in a case where the distribution of user terminals under channel shutdown is inconsistent with that under channel non-shutdown, the data collected under the channel non-shutdown state is used for optimization to obtain the antenna weight values under the channel non-shutdown state; then the data under the channel shutdown state is used to optimize different antenna weight values for each channel shutdown strategy.

Algorithm idea of the optimization strategy in this operation is described as follows:

When the distribution of user terminals under the channel shutdown state is different from that under the channel non-shutdown state, a single set of antenna coverage patterns cannot adapt to multiple user terminal distributions. Therefore, separate optimization is required for the different distributions of user terminals so that the coverage range of each set of weight values matches the user terminal distribution under the corresponding scenario, thereby improving the coverage effect.

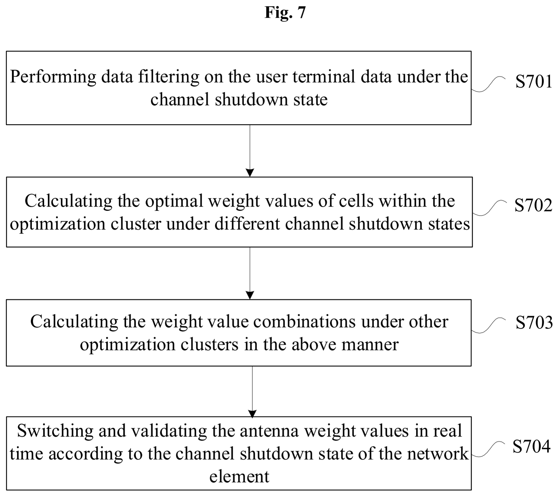

Fig. 7 is a flow chart of an optimization strategy when the distribution of user terminals under a channel shutdown state is inconsistent with that under a channel non-shutdown state according to an embodiment of the present disclosure. As shown in Fig. 7, the flow includes the following operations S701 to S704.

In operation S701, data filtering is performed on the user terminal data under the channel shutdown state.

In operation S702, the optimal weight values of cells within the optimization cluster under different channel shutdown states are calculated.

For example: when there are 3 cells C1, C2, and C3 in the optimization cluster, where C1 has 2 strategies (1/4 channel shutdown and non-shutdown), C2 has 3 strategies (1/4 channel shutdown, 1/2 channel shutdown, and non-shutdown), and C3 has 1 strategy (non-shutdown), the cell weight values under each strategy combination are calculated separately.

The weight values when C1 is under 1/4 channel shutdown, C2 is under 1/4 channel shutdown, and C3 is under non-shutdown are calculated in the same manner as in operation S603.

The weight values under other combinations are calculated in the same manner. There are a total of 6 combinations, and 6 sets of weight values are calculated.

In operation S703, the weight value combinations under other optimization clusters are calculated in the above manner.

In operation S704, the antenna weight values are switched and validated in real time according to the channel shutdown state of the network element, so as to use different antenna weight values for coverage under different distributions of user terminals and achieve the optimal coverage effect.

Scenario Embodiment 1:

In this embodiment, the distribution of user terminals in cells within the optimization cluster under the channel shutdown states is consistent with that under the channel non-shutdown state.

There are 3 cells C1, C2, and C3 in the optimization cluster;

C1 has 2 strategies: 1/4 channel shutdown and channel non-shutdown;

C2 has 3 strategies: 1/4 channel shutdown, 1/2 channel shutdown, and channel non-shutdown; and

C3 has 1 strategy: channel non-shutdown.

In operation S1, the distribution of user terminals in each cell under different channel shutdown states is calculated in accordance with operation S505.

For example, 1000 pieces of Measurement Report (MR) data are used to count the distribution of user terminals in each cell under different channel shutdown states.

First, two-dimensional grids are divided, with HDOA at a HorizontalBeamGridSpace of 60 and VDOA at a VerticalBeamGridSpace of 20. The proportion of user terminals in each grid is counted separately to obtain the distribution of user terminals in each cell under different channel shutdown states.

The distribution of user terminals in C1 under the channel non-shutdown state is shown in Table 3:

Table 3

|  | HDOA[-60, -1] | HDOA[0,60] |
|---|---|---|
| VDOA[-20,-1] | 0.4 | 0.1 |
| VDOA[0,20] | 0.35 | 0.15 |

The distribution of user terminals in C1 under the 1/4 channel shutdown state is shown in Table 4:

Table 4

|  | HDOA[-60, -1] | HDOA[0,60] |
|---|---|---|
| VDOA[-20,-1] | 0.45 | 0.15 |
| VDOA[0,20] | 0.3 | 0.1 |

In operation S2, the Euclidean distance is calculated as follows according to Formula (1) above to determine the similarity.

$$d = \sqrt{(0.4-0.45)^2 + (0.1-0.15)^2 + (0.3-0.35)^2 + (0.1-0.15)^2} = 0.1$$

Assuming the similarity distance threshold is 0.3, since 0.1 < 0.3, it indicates that the distribution of user terminals in C1 under the channel non-shutdown state is the same as that under the 1/4 channel shutdown state.

The Euclidean distances are calculated separately in the same manner so as to obtain the results as follows.

The Euclidean distance between the distribution of user terminals in C2 under the 1/4 channel shutdown state and that under the channel non-shutdown state is 0.15; and

The Euclidean distance between the distribution of user terminals in C2 under the 1/2 channel shutdown state and that under the channel non-shutdown state is 0.2. Both distances are less than the threshold of 0.3, indicating that the distribution of user terminals in C2 under the channel non-shutdown state is the same as that under the channel shutdown state.

Since C3 has only one state (channel non-shutdown), there is no need to calculate the distance for C3.

In operation S3, the following RSRP conversion is performed according to Formula (2) in operation S602:

Converting the RSRP of C1 under the 1/4 channel shutdown state to the RSRP under the channel non-shutdown state;

Converting the RSRP of C2 under the 1/4 channel shutdown state to the RSRP under the channel non-shutdown state;

Converting the RSRP of C2 under the 1/2 channel shutdown state to the RSRP under the channel non-shutdown state.

In operation S4, the optimal weight values of C1, C2, and C3 under the channel non-shutdown states are calculated in accordance with operations S603 to S604, so as to obtain the following optimal weight values: optimal weight value w1 for C1, optimal weight value w2 for C2, and optimal weight value w3 for C3.

In operation S5, the weight value w11 corresponding to w1 under the 1/4 channel shutdown state, the weight value w21 corresponding to w2 under the 1/4 channel shutdown state, and the weight value w22 corresponding to w2 under the 1/2 channel shutdown state are obtained through query.

That is:

The weight value of cell C1 under the channel non-shutdown state is w1, and the weight value of cell C1 under the 1/4 channel shutdown state is w11;

The weight value of cell C2 under the channel non-shutdown state is w2, the weight value of cell C2 under the 1/4 channel shutdown state is w21, and the weight value of cell C2 under the 1/2 channel shutdown state is w22;

The optimal weight value of C3 is w3.

In an exemplary embodiment, the number of divided grids is greater than 8.

Scenario Embodiment 2:

In this embodiment, the distribution of user terminals in cells within the optimization cluster under the channel shutdown states is inconsistent with that under the channel non-shutdown state.
There are 3 cells C1, C2, and C3 in the optimization cluster;

C1 has 2 strategies: 1/4 channel shutdown and channel non-shutdown;

C2 has 3 strategies: 1/4 channel shutdown, 1/2 channel shutdown, and channel non-shutdown; and

C3 has 1 strategy: channel non-shutdown.

In operation S1, the distribution of user terminals in each cell under different channel shutdown states is calculated in accordance with operation S505.
For example, 1000 pieces of Measurement Report (MR) data are used to count the distribution of user terminals in each cell under different channel shutdown states.
First, two-dimensional grids are divided, with HDOA at a HorizontalBeamGridSpace of 60 and VDOA at a VerticalBeamGridSpace of 20. The proportion of user terminals in each grid is counted separately to obtain the distribution of user terminals in each cell under different channel shutdown states.
The distribution of user terminals in C1 under the channel non-shutdown state is shown in Table 5:

Table 5

|  | HDOA[-60, -1] | HDOA[0,60] |
|---|---|---|
| VDOA[-20,-1] | 0.4 | 0.1 |
| VDOA[0,20] | 0.35 | 0.15 |

The distribution of user terminals in C1 under the 1/4 channel shutdown state is shown in Table 6:

Table 6

|  | HDOA[-60, -1] | HDOA[0,60] |
|---|---|---|
| VDOA[-20,-1] | 0.1 | 0.2 |
| VDOA[0,20] | 0.6 | 0.1 |

In operation S2, the Euclidean distance is calculated as follows according to Formula (1) above to determine the similarity:

$$d= \sqrt{(0.4-0.1)^2 + (0.1-0.2)^2 + (0.6-0.35)^2 + (0.1-0.15)^2} = 0.41$$

Assuming the similarity distance threshold is 0.3, since 0.41 > 0.3, it indicates that the distribution of user terminals in C1 under the channel non-shutdown state is different from that under the 1/4 channel shutdown state.
The Euclidean distances are calculated separately in the same manner so as to obtain the results as follows.
The Euclidean distance between the distribution of user terminals in C2 under the 1/4 channel shutdown state and that under the channel non-shutdown state is 0.35; and
The Euclidean distance between the distribution of user terminals in C2 under the 1/2 channel shutdown state and that under the channel non-shutdown state is 0.3. Both distances are greater than the threshold of 0.3, indicating that the distribution of user terminals in C2 under the channel non-shutdown state is different from that under the channel shutdown state.

Since C3 has only one state (channel non-shutdown), there is no need to calculate the distance for C3.

In operation S3, the optimal weight values of C1, C2, and C3 under each channel shutdown state are calculated in accordance with operation S507, so as to obtain the following optimal weight values as shown in Table 7:

Table 7

| Channel shutdown states of cell | Weight value of C1 | Weight value of C2 | Weight value of C3 |
|---|---|---|---|
| C1 1/4 shutdown, C2 1/4 shutdown, C3 non-shutdown | W11 | W12 | W13 |
| C1 1/4 shutdown, C2 1/2 shutdown, C3 non-shutdown | W21 | W22 | W23 |
| C1 1/4 shutdown, C2 non-shutdown, C3 non-shutdown | W31 | W32 | W33 |
| C1 non-shutdown, C2 non-shutdown, C3 non-shutdown | W41 | W42 | W43 |
| C1 non-shutdown, C2 1/2 shutdown, C3 non-shutdown | W51 | W52 | W53 |
| C1 non-shutdown, C2 1/4 shutdown, C3 non-shutdown | W61 | W62 | W63 |

In operation S4, the optimal antenna weight values of C1, C2, and C3 under each channel shutdown state and the channel non-shutdown state calculated in operation S3 are validated on the network element, so that when the cells switch to different state combinations, the corresponding weight values are automatically validated.

Scenario Embodiment 3:

In this embodiment, the distribution of user terminals in cells within the optimization cluster under the channel shutdown states is partially similar and partially dissimilar to that under the channel non-shutdown state.

There are 3 cells C1, C2, and C3 in the optimization cluster;

C1 has 2 strategies: 1/4 channel shutdown and channel non-shutdown;

C2 has 3 strategies: 1/4 channel shutdown, 1/2 channel shutdown, and channel non-shutdown; and

C3 has 1 strategy: channel non-shutdown.

In operation S1, the distribution of user terminals in each cell under different channel shutdown states is calculated in accordance with operation S505:
For example, 1000 pieces of Measurement Report (MR) data are used to count the distribution of user terminals in each cell under different channel shutdown states.

First, two-dimensional grids are divided, with HDOA at a HorizontalBeamGridSpace of 60 and VDOA at a VerticalBeamGridSpace of 20. The proportion of user terminals in each grid is counted separately to obtain the distribution of user terminals in each cell under different channel shutdown states.

The distribution of user terminals in C1 under the channel non-shutdown state is shown in Table 8:

Table 8

| | HDOA[-60, -1] | HDOA[0,60] |
|---|---|---|
| VDOA[-20,-1] | 0.4 | 0.1 |
| VDOA[0,20] | 0.35 | 0.15 |

The distribution of user terminals in C1 under the 1/4 channel shutdown state is shown in Table 9:

Table 9

|  | HDOA[-60, -1] | HDOA[0,60] |
|---|---|---|
| VDOA[-20,-1] | 0.1 | 0.2 |
| VDOA[0,20] | 0.6 | 0.1 |

In operation S2, the Euclidean distance is calculated as follows according to Formula (1) above to determine the similarity:

$$d= \sqrt{(0.4-0.1)^2 + (0.1-0.2)^2 + (0.6-0.35)^2 + (0.1-0.15)^2} = 0.41$$

Assuming the similarity distance threshold is 0.3, since 0.41 > 0.3, it indicates that the distribution of user terminals in C1 under the channel non-shutdown state is different from that under the 1/4 channel shutdown state.

The Euclidean distances are calculated separately in the same manner so as to obtain the results as follows.

The Euclidean distance between the distribution of user terminals in C2 under the 1/4 channel shutdown state and that under the channel non-shutdown state is 0.25, which is less than 0.3, indicating that the distribution of user terminals in C2 under the 1/4 channel shutdown state is similar to that under the channel non-shutdown state; and

The Euclidean distance between the distribution of user terminals in C2 under the 1/2 channel shutdown state and that under the channel non-shutdown state is 0.4, which is greater than the threshold of 0.3, indicating that the distribution of user terminals in C2 under the 1/2 channel shutdown state is different from that under the channel non-shutdown state.

Since C3 has only one state, there is no need to calculate the distance for C3.

In summary, the distribution of user terminals divided by channel shutdown strategies is as follows:

Distribution of user terminals in C1: 1/4 channel shutdown, channel non-shutdown;

Distribution of user terminals in C2: 1/4 channel shutdown & channel non-shutdown, 1/2 channel shutdown;

Distribution of user terminals in C3: channel non-shutdown.

In operation S3, the following RSRP conversion is performed according to Formula (2) in operation S602: Converting the RSRP data reported by C2 under the 1/4 channel shutdown state in accordance with operation S602.

In operation S4, the optimal antenna weight values of C1, C2, and C3 under each channel shutdown state and the channel non-shutdown state are calculated using operation S507, as shown in Table 10. In this table, the 1/4 channel shutdown state of C2 is replaced by the corresponding channel non-shutdown state.

Table 10

| Channel shutdown states of cell | Weight values of C1 | Weight values of C2 | Weight values of C3 |
|---|---|---|---|
| C1 1/4 shutdown, C2 1/4 shutdown & non-shutdown, C3 non-shutdown | W11 | W12 | W13 |
| C1 1/4 shutdown, C2 1/2 shutdown, C3 non-shutdown | W21 | W22 | W23 |
| C1 non-shutdown, C2 non-shutdown& 1/4 shutdown, C3 non-shutdown | W31 | W32 | W33 |
| C1 non-shutdown, C2 1/2 shutdown, C3 non-shutdown | W41 | W42 | W43 |

In operation S5, the weight value mapping table between channel shutdown and channel non-shutdown is queried.

The weight value corresponding to W12 of C2 under the 1/4 channel shutdown state is obtained to be Wi through query, and the weight value corresponding to W32 of C2 under the 1/4 channel shutdown state is obtained to be Wj through query.

Then, the updated weight values of each cell after modifying Table 10 are shown in Table 11:

**EP 4 727 217 A1**

Table 11

| Channel shutdown states of cell | Weight values of C1 | Weight values of C2 | Weight values of C3 |
|---|---|---|---|
| C1 1/4 shutdown, C2 non-shutdown, C3 non-shutdown | W11 | W12 | W13 |
| C1 1/4 shutdown, C2 1/4 shutdown, C3 non-shutdown | W11 | Wi | W13 |
| C1 1/4 shutdown, C2 1/2 shutdown, C3 non-shutdown | W21 | W22 | W23 |
| C1 non-shutdown, C2 non-shutdown, C3 non-shutdown | W31 | W32 | W33 |
| C1 non-shutdown, C2 1/4 shutdown, C3 non-shutdown | W31 | Wj | W33 |
| C1 non-shutdown, C2 1/2 shutdown, C3 non-shutdown | W41 | W42 | W43 |

In operation S6, based on the weight value mapping table obtained in operation S5, the optimal antenna weight values of C1, C2, and C3 under each channel shutdown state and the channel non-shutdown state are validated on the network element, so that when the cells switch to different state combinations, the corresponding weight values are automatically validated.

Through the above embodiments of the present disclosure, the gap in coverage optimization under the channel shutdown state in related technologies is filled. By identifying the similarity between the user distribution under channel shutdown and that under the non-energy-saving state, more optimal antenna weight values are separately optimized for each state and combination, making the coverage under the channel shutdown state more consistent with the current user distribution and improving performance indicators and user experience.

The embodiments of the present disclosure further provide a computer-readable storage medium, where a computer program is stored. The computer program is configured to execute the operations in any one of the above method embodiments when running.

In an exemplary embodiment, the above-mentioned computer-readable storage medium may include, but is not limited to: a Universal Serial Bus (USB) flash drive, a Read-Only Memory (ROM), a Random Access Memory (RAM), a mobile hard disk, a magnetic disk, an optical disk, or other various media capable of storing computer programs.

The embodiments of the present disclosure further provide an electronic apparatus, including a memory and a processor. The memory stores a computer program, and the processor is configured to run the computer program to execute the operations in any one of the above method embodiments.

In an exemplary embodiment, the above-mentioned electronic apparatus may further include a transmission device and an input/output device, where the transmission device is connected to the processor, and the input/output device is connected to the processor.

Specific examples in this embodiment may refer to the examples described in the above embodiments and exemplary implementations, and this embodiment will not be repeated here.

Obviously, those having ordinary skill in the art should understand that each module or each operation of the present disclosure described above may be implemented by a general-purpose computing device, and they may be concentrated on a single computing device, or distributed on a network composed of multiple computing devices. They may be implemented by program codes executable by the computing device, so that they may be stored in a storage device and executed by the computing device. In some cases, the operations shown or described may be executed in an order different from that here, or they may be separately fabricated into each integrated circuit module, or multiple modules or operations thereof may be fabricated into a single integrated circuit module for implementation. Thus, the present disclosure is not limited to any specific combination of hardware and software.

The above descriptions are only exemplary embodiments of the present disclosure and are not intended to limit the present disclosure. For those having ordinary skill in the art, the present disclosure may have various modifications and changes. Any modifications, equivalent substitutions, improvements, etc., made within the principles of the present disclosure shall be included in the protection scope of the present disclosure.

**Claims**

1. An antenna weight value determination method, comprising:

   identifying, based on user terminal data and channel state information, distribution of user terminals in a cell under different channel states; and
   determining optimal antenna weight values under the different channel states based on the distribution of the user terminals.

2. The method according to claim 1, wherein the channel state information comprises channel shutdown states and a channel non-shutdown state, wherein the channel shutdown states comprise different channel shutdown states after channels are shut down according to different channel shutdown ratios, and the channel shutdown ratio is a ratio of a number of shutdown channels to a total number of antenna channels.

3. The method according to claim 2, wherein identifying the distribution of the user terminals in the cell under the different channel states comprises:

for any cell in any optimization cluster, dividing the user terminal data in the cell into groups according to the different channel states, wherein the optimization cluster is composed of a plurality of cells whose inter-cell area overlap meets a threshold condition, and each cell in the optimization cluster comprises at least one channel state;

performing gridding processing on the user terminal data in each of the groups based on a Horizontal Direction of Arrival, HDOA, and a Vertical Direction of Arrival, VDOA, of the cell, so as to obtain gridded data corresponding to the different channel states;

respectively obtaining similarity between the gridded data corresponding to each of the different channel shutdown states and the gridded data corresponding to the channel non-shutdown state; and

identifying the distribution of the user terminals in the cell under the different channel states based on the similarity.

4. The method according to claim 3, wherein the distribution of the user terminals in the cell under the different channel states comprises one of the following distributions:

the distribution of the user terminals under all the channel shutdown states is consistent with the distribution of the user terminals under the channel non-shutdown state;

the distribution of the user terminals under all the channel shutdown states is inconsistent with the distribution of the user terminals under the channel non-shutdown state;

the distribution of the user terminals under a part of the channel shutdown states is consistent with the distribution of the user terminals under the channel non-shutdown state;

the distribution of the user terminals under a part of the channel shutdown states is inconsistent with the distribution of the user terminals under the channel non-shutdown state.

5. The method according to claim 4, wherein in a case where the distribution of the user terminals under all the channel shutdown states is consistent with the distribution of the user terminals under the channel non-shutdown state, determining the optimal antenna weight values under the different channel states comprises:

for any of the channel shutdown states in the cell, converting Reference Signal Receiving Power, RSRP, data collected under the channel shutdown state into first RSRP data under the channel non-shutdown state;

predicting second RSRP data under a plurality of different antenna weight values based on the first RSRP data and a gain table; and

comparing the first RSRP data and the second RSRP data, and selecting an antenna weight value corresponding to maximum RSRP data as the optimal antenna weight value under the channel shutdown state.

6. The method according to claim 4, wherein in a case where the distribution of the user terminals under all the channel shutdown states is inconsistent with the distribution of the user terminals under the channel non-shutdown state, determining the optimal antenna weight values under the different channel states comprises:

for any of the channel shutdown states in the cell, predicting fourth Reference Signal Receiving Power, RSRP, data under a plurality of different antenna weight values based on third RSRP data under the channel shutdown state and a gain table; and

comparing the third RSRP data and the fourth RSRP data, and selecting an antenna weight value corresponding to maximum RSRP data as the optimal antenna weight value under the channel shutdown state.

7. The method according to claim 4, wherein in a case where the distribution of the user terminals under a part of the channel shutdown states is consistent with the distribution of the user terminals under the channel non-shutdown state, determining the optimal antenna weight values under the different channel states comprises:

in the cell, for any of the channel shutdown states under which the distribution of the user terminals is consistent with the distribution of the user terminals under the channel non-shutdown state, converting Reference Signal Receiving Power, RSRP, data collected under the channel shutdown state into fifth RSRP data under the channel non-shutdown state; predicting sixth RSRP data under a plurality of different antenna weight values based on the fifth RSRP data and a gain table; and comparing the fifth RSRP data and the sixth RSRP data, and selecting an antenna weight value corresponding to maximum RSRP data as the optimal antenna weight value under the channel shutdown state.

8. The method according to claim 4, wherein in a case where the distribution of the user terminals under a part of the channel shutdown states is inconsistent with the distribution of the user terminals under the channel non-shutdown state, determining the optimal antenna weight values under the different channel states comprises:
for any of the channel shutdown states under which the distribution of the user terminals is inconsistent with the distribution of the user terminals under the channel non-shutdown state, predicting eighth Reference Signal Receiving Power, RSRP, data under a plurality of different antenna weight values based on seventh RSRP data under the channel shutdown state and a gain table; and comparing the seventh RSRP data and the eighth RSRP data, and selecting an antenna weight value corresponding to maximum RSRP data as the optimal antenna weight value under the channel shutdown state.

9. The method according to any one of claims 5 to 8, wherein when determining the optimal antenna weight values under the different channel states, the method further comprises:
determining an antenna weight value corresponding to the RSRP data collected under the channel non-shutdown state as the optimal antenna weight value under the channel non-shutdown state.

10. The method according to claim 1, wherein after determining the optimal antenna weight values under the different channel shutdown states, the method further comprises:
switching, according to a current channel state of the cell, an antenna weight value of the cell to the optimal antenna weight value corresponding to the current channel state of the cell.

11. An antenna weight value determination apparatus, comprising:

   an identification module, configured to identify, based on user terminal data and channel state information, distribution of user terminals in a cell under different channel states; and
   a determination module, configured to determine optimal antenna weight values under the different channel states based on the distribution of the user terminals.

12. A computer-readable storage medium, wherein a computer program is stored in the computer-readable storage medium, and the computer program, when executed by a processor, causes the processor to implement operations of the method according to any one of claims 1 to 10.

13. An electronic apparatus, comprising a memory, a processor, and a computer program stored on the memory and executable on the processor, wherein the processor, when executing the computer program, implements operations of the method according to any one of claims 1 to 10.

**Fig. 1**

**Fig. 2**

**Fig. 3**

| |
|---|
| Identifying, based on user terminal data and channel state information, distribution of user terminals in a cell under different channel states |

S302

| |
|---|
| Determining optimal antenna weight values under the different channel states based on the distribution of the user terminals |

S304

**Fig. 4**

**Fig. 5**

Selecting an optimization target range and starting data collection by a network element — S501

Acquiring user terminal data and channel shutdown state information by the network element — S502

Collecting and storing user terminal data and channel non-shutdown state information of the cell by the network element management apparatus — S503

Using an optimization cluster division algorithm to group cells with close relationships into an optimization cluster, and performing adjustment and optimization on the basis of the optimization cluster — S504

Identifying the distribution of user terminals by the network element management apparatus based on the user terminal data and the channel shutdown state information of the cell, and determining whether the distribution of user terminals under each channel shutdown strategy is the same as that under the channel non-shutdown state — S505

Consistent distribution

Inconsistent distribution

S506

Processing the data collected under the channel shutdown scenario, optimizing the processed user terminal data under the channel shutdown scenario together with the user terminal data collected under the channel non-shutdown scenario to obtain a set of antenna weight values, wherein the set of antenna weight values is validated under the channel non-shutdown state, and the corresponding antenna weight value is queried and validated according to a mapping relationship between weight values under channel shutdown and weight values under channel non-shutdown

S507

Using the data collected under the channel non-shutdown state for optimization to obtain the antenna weight values under the channel non-shutdown state; then using the data under the channel shutdown state to optimize different antenna weight values for each channel shutdown strategy

**Fig. 6**

| |
|---|
| Performing data filtering on the user terminal data under the channel shutdown state to divide the user terminal data of the cells into groups according to the different channel shutdown states of each cell |

S601

| |
|---|
| Processing and converting RSRP data under the channel shutdown state into the corresponding data under the channel non-shutdown state to obtain RSRP CDF50 |

S602

| |
|---|
| Using an intelligent optimization algorithm to calculate the optimal antenna weight values and determine the maximum RSRP CDF50, wherein the data sources are the RSRP data under the channel shutdown state converted in operation S602 and the RSRP data under the channel non-shutdown state |

S603

| |
|---|
| Based on the optimal weight value combination output in operation S603, the antenna weight values for 1/4 channel shutdown, 1/2 channel shutdown, and 3/4 channel shutdown are obtained by looking up Table 1 and Table 2 |

S604

| |
|---|
| Validating the antenna weight values on the network element device; the network element switches the antenna weight values in a timely manner according to the current channel shutdown state to achieve the best coverage effect |

S605

**Fig. 7**

| Performing data filtering on the user terminal data under the channel shutdown state | S701 |

↓

| Calculating the optimal weight values of cells within the optimization cluster under different channel shutdown states | S702 |

↓

| Calculating the weight value combinations under other optimization clusters in the above manner | S703 |

↓

| Switching and validating the antenna weight values in real time according to the channel shutdown state of the network element | S704 |

## INTERNATIONAL SEARCH REPORT

International application No.

**PCT/CN2023/142950**

### A. CLASSIFICATION OF SUBJECT MATTER

H04W 52/02(2009.01)i

According to International Patent Classification (IPC) or to both national classification and IPC

### B. FIELDS SEARCHED

Minimum documentation searched (classification system followed by classification symbols)

IPC:H04W,H04L

Documentation searched other than minimum documentation to the extent that such documents are included in the fields searched

Electronic data base consulted during the international search (name of data base and, where practicable, search terms used)

CNTXT, WPABS, ENTXT, DWPI, VEN, CNABS: 天线, 权值, 确定, 用户终端数据, 通道状态信息, 不同, 小区, 用户终端, 分布, 最优, 优, Antenna, Weights, Determine, User Terminal Data, Channel State Information, Different, Cell, User Terminal, Distributed, Optimal

### C. DOCUMENTS CONSIDERED TO BE RELEVANT

| Category* | Citation of document, with indication, where appropriate, of the relevant passages | Relevant to claim No. |
|---|---|---|
| Y | CN 115226142 A (CHINA MOBILE GROUP ANHUI CO., LTD. et al.) 21 October 2022 (2022-10-21) description, paragraphs [0063]-[0113], figures 1-9, and claims 1-11 | 1-13 |
| Y | CN 116318294 A (CHINA MOBILE COMMUNICATION LTD., RESEARCH INSTITUTE et al.) 23 June 2023 (2023-06-23) description, paragraphs [0039]-[0104], figures 1-16, and claims 1-21 | 1-13 |
| Y | CN 114039820 A (GUANGZHOU HERYSTORM TECHNOLOGY CO., LTD.) 11 February 2022 (2022-02-11) description, paragraphs [0101]-[0244], figures 1-6, and claims 1-13 | 1-13 |
| Y | CN 115134817 A (CHINA MOBILE GROUP SHANDONG CO., LTD. et al.) 30 September 2022 (2022-09-30) description, paragraphs [0066]-[0158], figures 1-9, and claims 1-10 | 1-13 |
| Y | CN 114501530 A (CHINA MOBILE GROUP DESIGN INSTITUTE CO., LTD. et al.) 13 May 2022 (2022-05-13) description, paragraphs [0074]-[0188], figures 1-6, and claims 1-10 | 1-13 |

☑ Further documents are listed in the continuation of Box C. ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **14 March 2024** | **21 March 2024** |

| Name and mailing address of the ISA/CN | Authorized officer |
|---|---|
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT

International application No.

**PCT/CN2023/142950**

### C. DOCUMENTS CONSIDERED TO BE RELEVANT

| Category* | Citation of document, with indication, where appropriate, of the relevant passages | Relevant to claim No. |
|---|---|---|
| A | CN 114189883 A (ZTE CORP.) 15 March 2022 (2022-03-15)<br>entire document | 1-13 |
| A | US 2017134913 A1 (SONY CORP.) 11 May 2017 (2017-05-11)<br>entire document | 1-13 |

Form PCT/ISA/210 (second sheet) (July 2022)

**INTERNATIONAL SEARCH REPORT**
Information on patent family members

International application No.

**PCT/CN2023/142950**

| Patent document cited in search report | | | Publication date (day/month/year) | Patent family member(s) | | | Publication date (day/month/year) |
|---|---|---|---|---|---|---|---|
| CN | 115226142 | A | 21 October 2022 | None | | | |
| CN | 116318294 | A | 23 June 2023 | None | | | |
| CN | 114039820 | A | 11 February 2022 | None | | | |
| CN | 115134817 | A | 30 September 2022 | None | | | |
| CN | 114501530 | A | 13 May 2022 | None | | | |
| CN | 114189883 | A | 15 March 2022 | None | | | |
| US | 2017134913 | A1 | 11 May 2017 | US | 2020021951 | A1 | 16 January 2020 |
| | | | | WO | 2016000556 | A1 | 07 January 2016 |
| | | | | EP | 3166232 | A1 | 10 May 2017 |
| | | | | CN | 105471487 | A | 06 April 2016 |

Form PCT/ISA/210 (patent family annex) (July 2022)